# EUROPEAN PATENT APPLICATION

(11) **EP 3 647 383 A1**
(43) Date of publication of application: **06.05.2020**
(21) Application number: 19206041.6
(22) Date of filing: 29.10.2019
(51) Int. Cl.: C09D 167/08

(54) **ACID-CURED COATING COMPOSITION WITH LOW FREE FORMALDEHYDE EMISSION AND PREPARATION METHOD THEREOF**

(30) Priority: 31.10.2018 CN 201811286026
(71) Applicant: Guangdong Huarun Paints Co. Ltd., Foshan, Guangdong 528306 (CN)
(72) Inventor: YANG, Wei, Foshan City, Guangdong 528306 (CN); TAO, Jie, Foshan City, Guangdong 528306 (CN)
(74) Representative: Grey, Ian Michael

(57) **Abstract**

The present disclosure refers to an acid-cured coating composition with low free formaldehyde emission and preparation method thereof. The acid-cured coating composition comprises an alkyd resin, an amino resin, and an acetoacetyl-functional silicon-based resin, wherein upon curing, the amino resin itself releases at least 0.8 wt% of formaldehyde, based on the weight of the amino resin; weight ratio of the alkyd resin and the amino resin is in a range of from 70:30 to 45:55. The present disclosure also refers to a coated article.

## Description

### TECHNICAL FIELD

The present disclosure refers to an acid-cured product with low free formaldehyde and a preparation method thereof. In particular, the present disclosure refers to an acid-cured coating composition with low free formaldehyde emission and a preparation method thereof as well as a coated article.

### BACKGROUND

Acid-curing or acid cure or acid-cured (AC) coating, one of coatings that are early developed and applied in the coatings industry, utilizes acidic catalysts to accelerate cross-linking between amino resins and alkyds. AC coating has many advantages such as a hard and wear-resistant paint film with high heat resistance, water resistance and cold resistance; good transparency; good yellowing resistance; containing no isocyanate that is usually present in solvent-based two-component (2K) polyurethane (PU) coating. It is very suitable for the application on wood substrates, in particular on furniture wood. However, amino resin derived from urea and melamine usually releases formaldehyde. As a result, an acid-cured product contains a large amount of free formaldehyde which is released for a long period of time, causing severe physical damage to constructors and users. With the increasing concern about environmental pollution and physical health in recent years, the application of AC coatings has been increasingly restricted.

In order to obtain acid-cured coatings and products with low free formaldehyde, now the following three solutions have been mainly developed in the field of coatings.

In the first solution, the amount of free formaldehyde in acid-cured product is reduced by lowering the amount of the formaldehyde-releasing amino resin itself. Typically, in the case that crosslinking agent is an amino resin crosslinking agent that releases formaldehyde, the crosslinking agent is present in a very low amount (e.g., less than about 15 wt% or less than about 10 wt% of coating composition). However, the amount of crosslinking agent can affect various coating properties such as coating hardness, abrasion resistance, and flexibility. Therefore, although the acid-cured products obtained by using this solution have a reduced amount of formaldehyde emission, the resulting paint film has relatively bad properties due to insufficient cross-linking of paint film. More importantly, those acid-cured products still do not meet the market's requirements for low formaldehyde content (for example, E1 environmental standards adopted in Europe).

In the second solution, a low formaldehyde-releasing amino resin crosslinking agent is used, such as S-2022-74 low formaldehyde amino resin crosslinking agent available from Cytec Industries Inc. It is known that low formaldehyde-releasing amino resin crosslinking agents themselves release little or no formaldehyde. However, the currently known low formaldehyde-releasing amino resin cross-linking agent has a specific structure (for example, prepared from cyclic urea and polyalkyl aldehyde), a complicated preparation process, and high production cost, thereby severely limiting its application and popularization in acid cure system.

In the third solution, a porous powdered formaldehyde trapping agent is used. As an exemplary powdered formaldehyde trapping agent, the formaldehyde trapping agent is formed by filling cuprammonium (Cu-ammonia) complex ions in layers or pores of sodium bentonite, activated clay or zeolite as a matrix may be used, wherein the agent has an NH₃/Cu²⁺ ratio of between 2 and 6 and a Cu content of between 1 and 5 wt%. As another exemplary powdered formaldehyde trapping agent, a TiO₂ photocatalyst, a metal phosphate and an NH₄ or NH₂ based compound supported on silica gel, may be used. These formaldehyde trapping agents are mainly used to physically adsorb formaldehyde and then remove formaldehyde by chemical reaction. However, the functions of this solution are mainly limited by physical adsorption, and rely on porous structure of powdery formaldehyde trapping agent, resulting in low efficiency of chemical removal of formaldehyde and high cost. More importantly, when such a porous powdery formaldehyde trapping agent is applied on wood, the properties of the coating such as transparency, abrasion resistance, gloss, adhesion of coating to wood, and the like are severely affected.

Therefore, there is a need for an acid cure coating composition that has a wide range of applications and a very low free formaldehyde content while coating properties (such as coating hardness, gloss, drying speed or transparency) are not impaired or even improved.

### SUMMARY

As described in BACKGROUND, the above problems cannot be solved well by using the prior art solutions which are incapable of reducing free formaldehyde content without damaging other properties. On the one hand, due to the particularity of the acid-cured coating itself, the use of an amino resin results in a coating having a large amount of free formaldehyde, and the resulting coating keeps releasing formaldehyde to the environment for a long period of time. On the other hand, acid cure coatings have excellent properties (including for example abrasion resistance, water resistance, heat resistance, yellowing resistance, etc.), but these properties are easily affected by the amount of the amino resin and the filler. Therefore how to better solve the problems of free formaldehyde in an acid cure system is a difficult problem to be solved in the field. The inventors tried a large number of possible technical solutions, and conducted in-depth technical research, and spent a lot of creative labor to discover the technical solutions described herein.

The inventors have found that the above object can be achieved by the technical solutions in the present disclosure.

A first aspect of the present disclosure provides an acid cure coating composition comprising an alkyd resin, an amino resin, and an acetoacetyl functional silicon-based resin, wherein upon curing, the amino resin itself releases at least 0.8 wt% of formaldehyde based on the weight of the amino resin; and the weight ratio of the alkyd resin to the amino resin is in a range of from 70:30 to 45:55.

A second aspect of the present disclosure provides a method for the preparation of the acid cure coating composition disclosed herein, comprising the step of mixing an acetoacetyl functional silicon-based resin with an alkyd resin and an amino resin, wherein upon curing, the amino resin itself releases at least 0.8 wt% of formaldehyde, based on the weight of the amino resin; and the weight ratio of the alkyd resin to the amino resin is in a range of from 70:30 to 45:55.

A third aspect of the present disclosure provides a coated article comprising a substrate having thereon a layer of the acid cure coating composition as described herein.

The inventors have surprisingly found that the acid cure coating compositions and coated articles in the present disclosure significantly reduce the amount of free formaldehyde, meet E1 environmental standard adopted in Europe, and form a coating without significantly damaged or with even improved properties (e.g. hardness, gloss, drying speed, and transparency). The technical solution in the disclosure is simple and easy to implement, and has wide application range.

Details of one or more embodiments of the invention are set forth in the description hereinafter. Other features, objects, and advantages of the invention will be clear according to the description and appended claims.

### SELECTED DEFINITIONS

As used herein, "a", "an", "the", "at least one", and "one or more" are used interchangeably, unless indicated otherwise. Thus, for example, a coating composition that comprises "an" additive can be interpreted to mean that the coating composition includes "one or more" additives. The use of the singular form herein intended to include the corresponding plural form.

Throughout the present disclosure, where compositions are described as having, including, or comprising specific components, or where processes are described as having, including, or comprising specific process steps, it is contemplated that the compositions or processes as disclosed herein may further comprise other (optional) components or steps, whether or not specifically mentioned in this disclosure, but also it is contemplated that the compositions or processes may consist essentially of, or consist of, the recited components or steps.

As used herein, the recitations of numerical ranges by endpoints include all numbers subsumed within that range. For example, a range of from 1 to 5 includes the values of 1, 1.5, 2, 2.75, 3, 3.80, 4, 5, etc. Further, a numerical range in the disclosure should be construed as including any subset of numbers in that range. For example, a disclosure of from 1 to 5 should be construed as including the subsets of from 1 to 4, from 1.5 to 4.5, from 1 to 2, and so forth.

For the sake of brevity, only certain ranges are explicitly disclosed herein. However, ranges from any lower limit may be combined with any upper limit to recite a range not explicitly recited, ranges from any lower limit may be combined with any other lower limit to recite a range not explicitly recited, and in the same way, ranges from any upper limit may be combined with any other upper limit to recite a range not explicitly recited. Additionally, although not explicitly recited, within a range includes every point or individual value between its end points. Thus, every point or individual value may serve as its own lower or upper limit combined with any other point or individual value or any other lower or upper limit, to recite a range not explicitly recited.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein, the term "hydroxyl value" refers to the number of milligrams of potassium hydroxide equivalent to the hydroxyl content per gram of a sample. The hydroxyl number can be determined by methods well known in the art. For example, the hydroxyl value can be determined according to the standard GB/T 12008.3-2009 or the standard ISO 2554.

As used herein, the term "formaldehyde-releasing amino resin" means an amino resin which, upon curing, releases at least 0.8 wt% of formaldehyde based on the weight of the amino resin. As used herein, "low formaldehyde amino resin" refers to an amino resin which, upon curing, releases little or no formaldehyde (for example, less than about 0.1 wt%) based on the weight of the amino resin.

### BREIF DESCRIPTION OF THE DRAWINGS

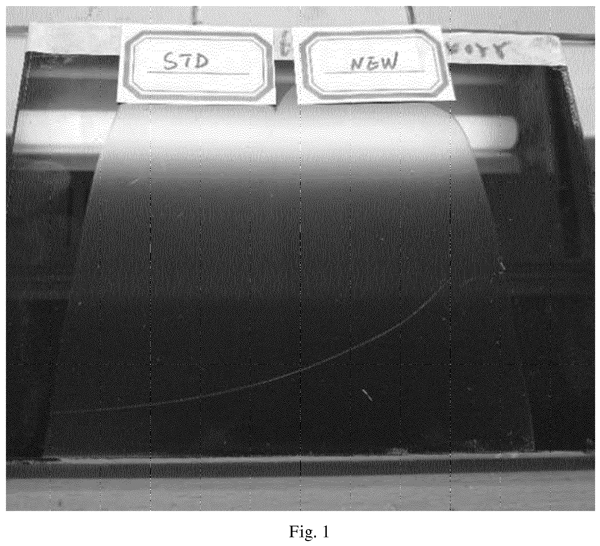

Fig. 1 shows a comparison of a coating (NEW) formed by the acid cure coating composition of the present invention with a coating (STD) formed by the conventional acid cure coating composition.

### DETAILED DESCRIPTION

### Acid Cure Coating Composition

In the first aspect of the present invention, an acid cure coating composition is provided, comprising an alkyd resin, an amino resin, and an acetoacetyl-functional silicon-based resin. The acid cure coating composition according to the present disclosure can comprise a relatively high amount of formaldehyde-releasing amino resin without emitting a large amount of formaldehyde, and the resulting coating retains good, even further improved coating properties.

The acid cure coating composition according to the present disclosure comprises formaldehyde-releasing amino resin. As described above, in the present disclosure, a formaldehyde-releasing amino resin means an amino resin which, upon curing, releases at least 0.8 wt% of formaldehyde, preferably at least 1.0 wt%, more preferably at least 1.2 wt% of formaldehyde, even more preferably 1.5 wt% of formaldehyde, still more preferably at least 2.0 wt% of formaldehyde, most preferably at least 3.0 wt% of formaldehyde, based on the weight of the amino resin. Suitable examples of the formaldehyde-releasing amino resins include the reaction products of an aldehyde and an amino compound. In some embodiments, the amino compound is selected from the group consisting of melamine, urea, benzoguanamine, acetoguanamine, and any combination thereof.

Preferably, the amino resin in the present disclosure may be optionally partially alkylated. In some embodiments, the amino resin is butylated amino resin, isobutylated amino resin, methylated amino resin or any combination thereof. Particularly preferably, the amino resin in the present disclosure comprises an amino resin which is not completely etherified (or alkylated), i.e. incompletely etherified (or alkylated) amino resin.

Without being bound by theory, the inventors believe that the acetoacetyl functional group can not only react with formaldehyde, but also react with methylol group on the N atom in the amino resin which is not completely etherified, so that the silicon-based resin is bonded to the amino resin. Possible reactions associated with acetoacetyl functional groups are exemplarily shown below.

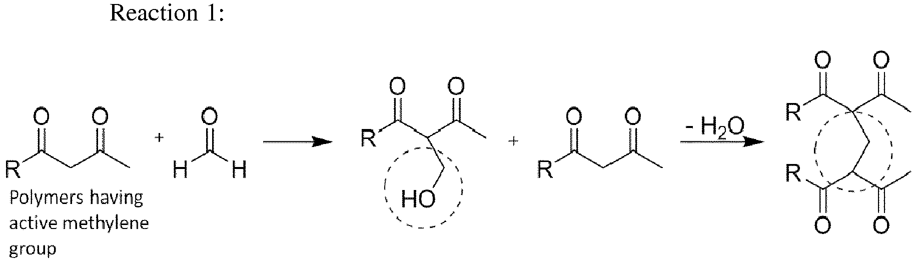

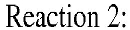

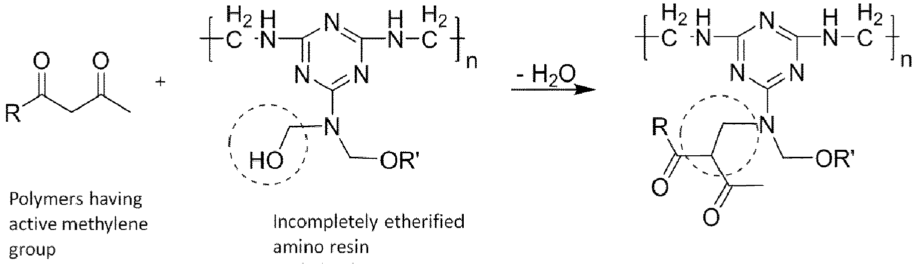

Therefore, the acid cure coating composition in the present disclosure not only absorbs free formaldehyde in liquid composition and significantly reduces the amount of formaldehyde released from dry coating, but also further improves the compatibility of silicon-based resin with amino resin, thereby further maintaining and/or improving the mechanical properties of the resulting coating film.

The acid cure coating composition in the present disclosure can comprise relatively high amount of formaldehyde-releasing amino resin. In some embodiments, weight ratio of the alkyd resin and the amino resin is in a range of from 70:30 to 45:55, preferably in a range of from 65:35 to 50:50, more preferably in a range of from 60:40 to 55:45. Particularly preferably, the weight ratio of the alkyd resin and the amino resin is in the range of from 62:38 to 58:42. The inventors have found that, by applying the above preferred weight ratio of the alkyd resin to the amino resin in the present disclosure, very good coating properties can be obtained, such as coating hardness, cold and heat cycle resistance, chemical resistance, adhesion, gloss, drying speed, transparency, etc.

Alternatively, the acid cure coating composition according to the present invention may also contain a small amount of a low formaldehyde amino resin. Examples of the low formaldehyde amino resins include those described in International Application No. WO 2009/073836 A1 (Cytec Technology Corp.), which is incorporated herein by reference.

According to the present invention, the acid cure coating composition may comprise an alkyd resin known in the art for use in an acid cure system. In some embodiments, the alkyd resin has a hydroxyl value of from 50 to 250 mg KOH/g, preferably a hydroxyl value of from 80 to 220 mg KOH/g, more preferably a hydroxyl value of from 100 to 200 mg KOH/g, and even more preferably a hydroxyl value of from 120 to 180 mg KOH/g. It is well known that in acid cure coating compositions, an alkyd resin having a relatively low hydroxyl value (for example, a hydroxyl value of less than 120 mg KOH/g) can reduce the amount of amino resin used for crosslinking, and further reduce the free formaldehyde released from the amino resin. Nevertheless, the inventors have surprisingly found that the acid cure coating composition in the present disclosure may comprise an alkyd resin having a relatively high hydroxyl value as one of resin components, and the coating thus obtained still has very low free formaldehyde content.

The acid cure coating composition in the present disclosure may further comprise an acidic cure catalyst selected from the group consisting of paratoluene sulfonic acid, benzene sulfonic acid, methane sulfonic acid, dinonylnaphthalene sulfonic acid, dinonylnaphthalene disulfonic acid, dodecylbenzene sulfonic acid, oxalic acid, maleic acid, phthalic acid, acrylic acid, ethyl phosphate, phosphoric acid, dimethyl acid pyrophosphate and any combination thereof.

The inventors have surprisingly found that the addition of an acetoacetyl-functional silicon-based resin to an acid cure coating composition comprising an amino resin and an alkyd resin as a polymer matrix can result in a coating having a significantly reduced release of free formaldehyde and meanwhile still maintaining the properties of the coating. This is unpredictable before the present invention. The technical solution in the present disclosure can not only use the formaldehyde-releasing amino resin in a relatively high amount, but also greatly reduce the free formaldehyde content of the composition and the amount of formaldehyde released in the coating. Even more surprisingly, the acid cure coating composition in the present disclosure may also achieve a coating with better gloss and clarity.

In embodiments of the invention, acid cure coating composition comprises an acetoacetyl-functional silicon-based resin. As used herein, the term "acetoacetyl-functional silicon-based resin" refers to a silicon-based resin having an acetoacetyl functional group 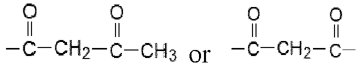 chemically bonded to a molecular skeleton containing silicon atom.

In some preferred embodiments, the acetoacetyl-functional silicon-based resin may be present in an amount of from 0.1 to 25 wt%, preferably from 0.5 to 20 wt%, more preferably from 1.0 to 18 wt%, even more preferably from 1.5 to 15 wt% and most preferably from 2.0 to 12 wt%, relative to the total weight of the acid cure coating composition. For example, the acetoacetyl-functional silicon-based resin is present in an amount of 2.5 wt%, 3 wt%, 3.5 wt%, 4 wt%, 4.5 wt%, 5.0 wt%, 5.5 wt%, 6.0 wt%, 7.0 wt%, 7.5 wt%, 8.0 wt%, 9.0 wt%, or 10.0 wt%, relative to the total weight of the acid cure coating composition.

In the present disclosure, the acetoacetyl-functional silicon-based resin has a relatively high amount of acetoacetyl functional groups. In some preferred embodiments, the acetoacetyl-functional silicon-based resin may suitably include the acetoacetyl functional groups in an amount of at least 25 wt%, more preferably at least 30 wt%, even more preferably at least 40 wt%, and most preferably 50 wt%, relative to the total weight of the acetoacetyl-functional silicon-based resin. In the present disclosure, higher concentrations of acetoacetyl functional groups in the acetoacetyl-functional silicon-based resin are preferred, but should not exceed 54 wt% relative to the total weight of the acetoacetyl-functional silicon-based resin.

In some embodiments, the acetoacetyl functional silicon-based resin has a number average molecular weight of from 700 g/mol to 20,000 g/mol, preferably from 1,000 to 20,000 g/mol, and more preferably from 3,000 g/mol to 20,000 g/mol.

In some embodiments, the acetoacetyl functional silicon-based resin comprises at least 3.5 wt% of silicon atom, relative to the total weight of the acetoacetyl functional silicon-based resin. Preferably, the concentration of silicon atom in the acetoacetyl-functional silicon-based resin is at least 4.9 wt %, at least 5.4 wt %, and at least 7.2 wt % or more, relative to the total weight of the acetoacetyl-functional silicon-based resin. Also preferably, the concentration of silicon atom in the acetoacetyl-functional silicon-based resin is 8.9 wt% or less, 6.6% or less, or even 6.0 wt% or less, relative to the total weight of the acetoacetyl-functional silicon-based resin.

Acetoacetyl functional silicon-based resin may be obtained in a simple and inexpensive manner, such as through i) reacting a silane compound having three or more condensable functionalities with a polyol in excess by condensation, thereby forming a silicon-based resin; and ii) functionalizing the silicon-based resin of step i) with an acetoacetyl functional compound, to form the acetoacetyl functional silicon-based resin, wherein at least portion of the acetoacetyl-functional silicon-based resin. Suitable examples of the condensable functional groups include, but are not limited to, alkyloxy groups, alkenyloxy groups, aryloxy groups, alkanoyloxy groups, arylacyloxy groups, alkyl ketoximine groups and aryl ketoximine groups.

As a suitable example of the condensable functional group, an alkoxy group, an alkenyloxy group, an aryloxy group, an alkanoyloxy group, an aroyloxy group, an alkano oxime group, an aryl ketone fluorenyl group can be given.

Preferably, the silane compound having three or more condensable functionalities includes tetramethoxy silane, tetraethoxy silane, tetrapropyloxy silane, tetrabutoxy silane, methyltriacetyloxy silane, methyl tri(methylethylketoxime) silane, methyl trimethoxy silane, methyl tri(isopropenyloxy) silane, aminopropyl triethoxy silane, glycidyloxypropyl trimethoxy silane, α-monomethyl,ω-trimethoxy polydimethylsiloxane, α-monomethyl,ω-triethoxy polydimethylsiloxane, α-monomethyl,ω-tripropyloxy polydimethylsiloxane, or combination thereof. More preferably, the silane compound having three or more condensable functionalities is selected from the group consisting of tetramethoxy silane, tetraethoxy silane, tetrapropyloxy silane, tetrabutoxy silane, and combinations thereof.

As suitable examples of the polyol, ethylene glycol, propylene glycol, 1,2-propanediol, 1,3-propanediol, 1,4-butanediol, 1,5-pentanediol, 1,6-hexanediol, diethylene glycol, dipropylene glycol, triethylene glycol, tetraethylene glycol, neopentyl glycol, 2,2,4-trimethyl-1,3-pentanediol, cyclohexanediol, cyclohexanedimethanol, 2,2-dimethyl-3-hydroxypropyl 2,2-dimethyl-3-hydroxypropionate, bisphenol A, bisphenol F, bisphenol S, 1,3-butylethylpropanediol, 2-methyl-1,3-propanediol, cyclohexanedimethanol, glycerol, trimethylolethane, trimethylolpropane, tripropylene glycol, 1,4-benzyldimethanol, 1,4-benzyldiethanol, 2,4-dimethyl-2-ethylhexane-1,3-diol, 1,4-cyclohexanediethanol, hydroquinone, phenylenedimethanol, resorcinol, naphthalenediol, anthracene-1,10-diol, tris(2-hydroxyethyl) cyanurate, or any combination thereof, can be used.

As suitable examples of the acetoacetyl functional compound, allyl acetoacetate, ethyl acetoacetate, t-butyl acetoacetate, diketene, derivatives thereof, and combinations thereof may be used. Preferably, the acetoacetyl functional compound is selected from the group consisting of allyl acetoacetate, ethyl acetoacetate, t-butyl acetoacetate, and combinations thereof. More preferably, ethyl acetoacetate is used as the acetoacetyl functional compound. Preferably, the acetoacetyl functional compound reacts with the silane-based resin bearing hydroxyl groups via transesterification, thereby attaching acetoacetyl functional groups to the molecular skeletons of the silane-based resin as terminal groups or pendent groups.

The suitable conditions for the reactions carried out in steps i) and ii) are dependent on a variety of factors including the type of silane compound or polyol, the presence and type of catalyst and so on, and may determined empirically by a person skilled in the art.

The acid cure coating composition of the present disclosure may also optionally comprise pigments and fillers, additional additives or any combination thereof.

In some embodiments, pigments and fillers comprise carbon black powder, talc, or any combination thereof. The total amount of the pigments and fillers may be from 0 wt% to 50 wt%, for example, from 1 wt% to 45 wt%, from 2 wt% to 40 wt%, from 3 wt% to 35 wt%, from 4 wt% to 30 wt%, from 5 wt% to 25 wt%, or from 10 wt% to 20 wt%, based on the total weight of the coating composition. Further preferably, the amount of each of pigments and fillers is independently from 0 wt% to 50 wt%, from 1 wt% to 40 wt%, from 2 wt% to 30 wt%, from 3 wt% to 20 wt%, or from 4 wt% to 15 wt%, based on the total weight of the coating composition.

In the coating compositions of the present invention, optional additional additives may be those commonly used in coating compositions. Those additives do not adversely affect the coating composition or a cured coating resulting therefrom. Suitable additives include those agents which can, for example, improve the manufacturing, processing of the composition, enhance composition esthetics, improve a particular functional property or characteristics (for example, the adhesion to a substrate) of a coating composition or a cured coating resulting therefrom. Depending on the particular needs, the additives that may be present in the coating composition include, but not limited to, solvents, anti-skinning agents, driers, emulsifiers, packing materials, anti-migration aids, antibacterial agents, chain extenders, lubricants, wetting agents, biocides, plasticizers, defoamers, colorants, waxes, antioxidants, anticorrosive agents, flow control agents, dispersants, adhesion promoters, UV stabilizers, pH adjusters, leveling agents or a combination thereof. The amount of each of optional ingredients is sufficient to achieve its intended purpose, but preferably such amount does not adversely affect the coating composition or the cured coating derived therefrom. Preferably, the additional additives include wetting and dispersing agents, leveling agents, adhesion promoters, antifoaming agents, rheological additives, or any combination thereof.

In a preferred embodiment, the coating composition of the present invention comprises additional additives in a range of from about 0 wt% to about 30 wt%, preferably from about 0.1 wt% to about 25 wt%, relative to the total weight of the coating composition. Particularly, the amount of each additional additive in coating composition is in a range of from 0.1 wt% to 10.0 wt%, for example 0.2 wt%, 0.3 wt%, 0.4 wt%, 0.6 wt%, 0.7 wt%, 0.8 wt%, 0.9 wt%, 1 wt%, 1.1 wt%, 1.2 wt%, 1.3 wt%, 1.4 wt%, 1.5 wt%, 1.8 wt%, 2.0 wt%, 2.5 wt%, 3.0 wt%, 3.5 wt%, 4.0 wt%, 4.5 wt%, 5.0 wt%, 6.0 wt%, 8.0 wt% or 9.0 wt%, relative to the total weight of the coating composition.

The inventors have surprisingly found that the acid cure coating composition in the present disclosure has a significantly reduced free formaldehyde content and meets the E1 environmental standards adopted in Europe. In some embodiments of the present invention, as compared with a control coating composition that does not contain an acetoacetyl-functional silicone-based resin, the coating composition in the present disclosure can significantly reduce free formaldehyde content. For example, free formaldehyde content is reduced by at least 93%, more preferably at least 95%, even more preferably at least 96%, still more preferably at least 97%, and most preferably at least 98%. Moreover, in the embodiments of the invention, as compared with a dry film formed from a control coating composition that does not contain an acetoacetyl-functional silicone-based resin, the dry film formed from the coating composition of the present disclosure also has a significantly reduced release of free formaldehyde. For example, the amount of free formaldehyde released is reduced by at least 75%, more preferably by at least 80%, even more preferably by at least 85%, still more preferably by at least 90%, even more preferably by at least 97%.

In some preferred embodiments, the coating obtained from the acid cure coating composition releases less than 8 µg/inch², preferably less than 7 µg/inch², more preferably less than 6 µg/inch², still more preferably less than 5 µg/inch², even more preferably less than 4.5 µg/inch² formaldehyde, when tested with a thickness of 100 µm at 25 °C and 50% humidity. For examples, the coating obtained from the acid cure coating composition releases 4.0 µg/inch², 3.5 µg/inch², 3.0 µg/inch², 2.5 µg/inch², 2.0 µg/inch², 1.5 µg/inch², 1.0 µg/inch², or 0.5 µg/inch², when tested with a thickness of 100 µm at 25 °C and 50% humidity. Most preferably, the amount of formaldehyde released by the coating obtained from the acid cure coating composition in the present disclosure is below the detection limit.

Moreover, the properties (e.g., coating hardness, gloss, drying speed, transparency) of the coating obtained from the acid cure coating composition in the present disclosure are not significantly impaired or even improved. In particular, the inventors have found that the acid cure coating composition in the present disclosure is capable of achieving the same or similar KCMA properties, hardness, and drying speed as compared with a control acid cure coating composition that does not contain an acetoacetyl-functional silicone-based resin. Preferably, the coating obtained from the acid cure coating composition of the present disclosure has a pencil hardness of at least HB, more preferably a pencil hardness of at least F, and even more preferably a pencil hardness of up to H.

Even more surprisingly, the acid cure coating compositions in the present disclosure can form a coating with better gloss and transparency. This is especially advantageous in applications of wood substrates. Fig. 1 shows a comparison of a coating formed by the acid cure coating composition of the present invention with a coating formed by a control acid cure coating composition that does not contain an acetoacetyl-functional silicone-based resin. As can be seen from Fig. 1, the coating obtained from the sample in the present disclosure has a higher gloss and transparency than the control sample STD, and thus better reflects the appearance of the substrate. Due to the factors including differences in shooting environments and printing of colors and the like, the differences as shown in Fig. 1 are much smaller than the differences actually observed with naked eyes. However, the inventors can clearly observe with naked eyes that there are significant differences in gloss and transparency between the two coated samples. In conclusion, the sample of the present disclosure shows significantly better gloss and higher transparency.

### Process for Preparing Acid Cure Coating Composition

The second aspect of the present disclosure provides a process for the preparation of the acid cure coating composition, comprising the step of mixing an acetoacetyl functional silicon-based resin with an alkyd resin and an amino resin, wherein upon curing, the amino resin itself releases at least 0.8 wt% of formaldehyde, based on the weight of the amino resin; and the weight ratio of the alkyd resin and the amino resin is in a range of from 70:30 to 45:55.

The features as well as the preferences of each feature as described above can be adapted to the process of the present invention. For the sake of brevity, these features and the preferences will not repeat them here. For example, in some preferred embodiments, the acetoacetyl functional silicon-based resin is in an amount of from 0.1 to 25 wt%, relative to the total weight of the acetoacetyl functional silicon-based resin, the alkyd resin and the amino resin.

Upon reading the technical solutions herein, those skilled in the art can reasonably determine mixing order, reaction temperature, stirring speed and the like, according to practical experience and actual needs.

### Coated Article

The third aspect of the present disclosure provides a coated article comprising a substrate having thereon a coating formed from the acid cure coating composition as described herein.

The substrate can be any coatable material. An ordinary person skilled in the art will select and determine a suitable material as the substrate according to actual needs. In some preferred embodiments, the article according to the invention may be wood, paper, textile, leather, nonwoven, plastics surfaces, glass, ceramic, mineral building materials, metals or coated metals.

In some preferred embodiments, the coating obtained from the acid cure coating composition releases less than 8 µg/inch², preferably less than 7 µg/inch², more preferably less than 6 µg/inch², still more preferably less than 5 µg/inch², even more preferably less than 4.5 µg/inch² formaldehyde, when tested with a thickness of 100 µm at 25 °C and 50% humidity. For examples, the coating obtained from the acid cure coating composition releases 4.0 µg/inch², 3.5 µg/inch², 3.0 µg/inch², 2.5 µg/inch², 2.0 µg/inch², 1.5 µg/inch², 1.0 µg/inch², or 0.5 µg/inch², when tested with a thickness of 100 µm at 25 °C and 50% humidity. Most preferably, the amount of formaldehyde released by the coating obtained from the acid cure coating composition in the present disclosure is below the detection limit.

According to the invention, the coating composition can be applied by conventional application methods known to those skilled in the art. The application methods include dip coating, spin coating, spray coating, curtain coating, brush coating, roll coating, and other application methods known in the art. In the present disclosure, a wet on dry application process may be used. Conveniently, the solvent in the coating composition can be removed by drying in ambient conditions or with (for example, under) heat, so that a coating is formed.

### Examples

The present disclosure is more specifically described by the following examples. These examples are for illustrative purposes only. Embodiments of the invention are not limited to these specific examples. Unless otherwise noted, all parts, percentages, and ratios reported in the following examples are on a weight basis, and all reagents used in the examples are commercially available and used directly without further treatment.

### Test Methods

The following test methods are used herein, unless otherwise indicated.

**KCMA performance**

| No. | Test | Testing methods/conditions | Requirements |
|---|---|---|---|
| 1 | Shrinkage at high temperature | 48 to 50°C and 65% to 75% relative humidity for 24 hours | No blistering and no discoloration |
| 2 | Hot and cold cycles | 48 to 50°C and 65 to 75% relative humidity for half a hour, room temperature for half a hour, and then at - 20 to -22°C for 1 hour. The cycle is repeated five times. | No blistering, no crack, and no discoloration |
| 3 | Chemical resistance | Placing the chemicals as mentioned in the KCMA Standard on surfaces of coating for 24 hours. Mustard for one hour. Then sponging the surfaces with clear water and drying with a clean cloth. Observing the surfaces of coating. | No discoloration, no whitening, and no blistering |
| 4 | Edge immersion | Immersing edge in detergent for 24 hours. Taking out from detergent and observing the surfaces of coating. | No swelling, no discoloration, no whitening, and no blistering |
| 5 | Adhesion | 2MM | 4-5B |

### Hydroxyl value

The hydroxyl value of the resin was determined by titration according to ISO 2554.

### Free formaldehyde content in composition

A 0.05 g sample was weighed into a 20 mL sample vial. 5 mL ACN and 0.25 mL of DNPH were added in sample vial. The mixture was allowed to stand at room temperature for 1 hour for derivatization, and then analyzed by HPLC (DAD detector) at a wavelength of 360 nm. The analysis results were expressed in mg/kg sample.

### Amount of formaldehyde released from dry coating

Applying a coating film on a PE film: A sample was coated on a 1 inch × 10 inch PE film with a 100 µm applicator, and placed at room temperature for 15 minutes. Subsequently, the sample was placed in a 50°C oven for 50 minutes. Then, the sample was allowed to stay in incubation room at 25°C and 50% humidity for 7 days. The dried sample is then placed in a Micro-Chamber.

Zero-grade air was introduced into a chamber with a temperature controlled at 40°C at a flow rate of 250 mL/min, and collected on a DNPH silica gel column for 3 hours. The DNPH silica gel column was eluted with 10 mL ACN in a 10 mL volumetric flask. The resulting eluent was filtered through a 0.45 µm membrane filter into an HPLC autosampler vial and analyzed by HPLC (with a DAD detector) at a wavelength of 360 nm. The analysis results are expressed in µg/inch² samples.

### Pencil hardness

This test measures the hardness of a cured coating. Pencil hardness was assessed using ASTM D3363. The data is reported in the form of hardness of the last successful pencil prior to coating rupture. Thus, for example, if a coating does not rupture when tested with a 2H pencil, but ruptures when tested with a 3H pencil, the coating is reported to have a pencil hardness of 2H.

### Dry film transparency

This test was conducted in accordance with Chinese National Standard GB/T 2410-2008 Method A to evaluate the optical properties of a cured coating. A formulated sample was applied to a transparent PVC panel at a thickness of about 460 microns and then dried thoroughly for 3 days. The light transmittance of the resulting film was measured using a light transmittance/haze meter NDH5000 at room temperature.

### Drying performance

Tack free time of coating was determined using the international standard ISO 1517:1973: *Paints and varnishes* - *Surface-drying test* - *Ballotini method.*

### Example 1: Preparation of acetoacetyl-functional silicon-based resin

320.54 g tetrabutoxy silane and 223.45 g ethylene glycol were charged into a four-necked flask equipped with a thermometer, a top stirrer, a gas inlet, and a distilling setup at a room temperature. N₂ protection was provided by supplying dry N₂ gas through the gas inlet. Then the reaction mixture was heated to about 120°C, and kept at this temperature until some distillate was distilled off. Thereafter the heat was continued to raise the temperature of the reaction mixture to about 180°C until distillate of butanol was distilled off to be complete. Thus the silicon-based resin terminated with hydroxyl groups having a hydroxyl value of 422 mg KOH/g resin was prepared.

416.45 g ethyl acetoacetate was further added to the reaction mixture after its temperature was dropped below 80°C. Then the reaction mixture was heated to about 110°C, and kept at this temperature until some distillate was distilled off. Thereafter the heat was continued to raise the temperature of the reaction mixture to about 180°C until distillate of ethanol was distilled off to be complete. Thus the acetoacetyl-functional silicon-based resin was prepared as a bright yellow viscous liquid.

### Example 2: Preparation of acid cure coating composition

The acid cure coating composition was prepared according to conventional methods known to those skilled in the art. Under stirring, an amino resin, an alkyd resin, an auxiliary agent (such as a leveling agent, etc.), and powders (such as talc, etc.) were added to the reaction vessel. *p*-toluenesulfonic acid (PTSA) was added to the mixture as an acid curing catalyst. Viscosity of the coating was adjusted by using a thinner as needed. In this experiment, the acid cure coating composition was prepared using the amounts and procedures in Table 1 below. The used alkyd resin had a hydroxyl value of 170 ± 10 mg KOH/g.

**Table 1: Formulation and source of raw materials for acid cure coating composition**

| | Description of materials | Source of materials | Added amount (wt.%) |
|---|---|---|---|
| 1 | Alkyd resin | Eternal Materials Co., Ltd. | 28.1% |
| 2 | Solvent | - | 12% |

| Stirring uniformly at high speed, then adding the following ingredients while stirring | | | |
|---|---|---|---|
| 3 | Amino resin | Eternal Materials Co., Ltd. | 17.5% |
| 4 | Auxiliary agent | - | 5% |
| 5 | Powders | | 8% |

| Stirring uniformly at high speed, then adding the following ingredients while stirring | | | |
|---|---|---|---|
| 6 | Solvent | - | 29.4% |
| Total | | | 100% |

The composition was stored for later use.

### Example 3: Performance test

The acetoacetyl-functional silicon-based resin prepared in Example 1 was added to the composition obtained in Example 2 in the amounts shown in Table 2 below to obtain acid cure coating composition Samples 1-4. The free formaldehyde content in the wet film of each sample was measured. The results were shown in Table 2.

Each sample was coated on a plate, and each coating after drying was subjected to measurement of the amount of formaldehyde released from dry coating. The results were also shown in Table 2.

**Table 2: Amount of acetoacetyl-functional silicon-based resin and the tested formaldehyde contents/amounts**

| Sample | Amount of acetoacetyl-functional silicon-based resin (%) | Free formaldehyde content in coating composition (mg/kg) | Amount of formaldehyde released from dry coating (µg/inch²) |
|---|---|---|---|
| 1# | 1 | 279.6 | 4.2 |
| 2# | 3 | 268.6 | 3 |
| 3# | 5 | 197.6 | N.D. |
| 4# | 7 | 200.9 | N.D. |
| STD (Control) | 0 | 7469 | 22 |

| | | | |
|---|---|---|---|
| *N.D. for dry coating indicates not detectable amount (<0.5 µg/inch²). | | | |

The KCMA performance, pencil hardness, and drying speed of each coating were also measured. The results were shown in Table 3 below.

**Table 3: Properties of coatings**

| Tested properties | STD | #1 | #2 | #3 | #4 |
|---|---|---|---|---|---|
| KCMA performance | Pass | Pass | Pass | Pass | Pass |
| pencil hardness | HB-H | HB-H | HB-H | HB-H | HB-H |
| drying speed | Standard | Standard | Standard | Standard | Standard |

From the results of Table 2, when the acid cure coating compositions in the present disclosure were used, the formaldehyde content in the wet film was reduced by at least 95%, even preferably, at least 97%, as compared with the conventional standard acid cure coating composition. Moreover, the amount of formaldehyde released from dry coatings was reduced by at least 80%, and even reduced to an undetectable extent. Such results have clearly exceeded the reasonable expectations of those of ordinary skill in the art.

From the results of Table 3, the acid cure coating compositions in the present disclosure were capable of remarkably maintaining the excellent properties of the coatings produced by the acid cure coating compositions.

Furthermore, the optical properties of coatings of Control Sample STD and Sample 3 were separately tested. It was apparently observed with naked eyes that the two coated samples are significant different in gloss and transparency. The coating of Sample 3 exhibited better gloss and higher transparency than Control Sample STD.

### Example 4: Influence of various ratios of resins on KCMA performance of coatings

Sample A and Comparative Samples 1-2 were prepared using various weight ratios of alkyd resin to amino resin as shown in Table 4. KCMA performance of the coating formed from each sample was tested. The results were shown in Table 4.

**Table 4: Influence of various ratios of resins on KCMA performance**

| No. | Test | Testing methods/conditions | Requirements | weight ratios of alkyd resin to amino resin | | |
|---|---|---|---|---|---|---|
| | | | | Sample A (60:40) | Comparative Sample 1 (40:60) | Comparative Sample 2 (80:20) |
| 1 | Shrinkage at high temperature | 48 to 50°C and 65% to 75% relative humidity for 24 hours | No blistering and no discoloration | Pass | Pass | Pass |
| 2 | Hot and cold cycles | 48 to 50°C and 65 to 75% relative humidity for half a hour, room temperature for half a hour, and then at -20 to - 22°C for 1 hour. The cycle is repeated five times. | No blistering, no crack, and no discoloration | Pass | Cracks on surface | Pass |
| 3 | Chemical resistance | Placing the chemicals as mentioned in the KCMA Standard on surfaces of coating for 24 hours. Mustard for one hour. | No discoloration, no whitening, and no blistering | Pass | Discoloration and whitening | Whitening and blistering |
| | | Then sponging the surfaces with clear water and drying with a clean cloth. Observing the surfaces of coating. | | | | |
| 4 | Edge immersion | Immersing edge in detergent for 24 hours. | No swelling, no discoloration, no whitening, and no blistering | Pass | Whitening and blistering | Swelling and whitening |
| | | Taking out from detergent and observing the surfaces of coating. | | | | |
| 5 | Adhesion | 2MM | 4-5B | 5B | 3B | 3B |

As can be seen from Table 4, weight ratio of alkyd resin to amino resin within the range as described in the present disclosure can result in excellent properties of coating in hot and cold cycles, chemical resistance test, edge immersion test, and adhesion test.

While the invention has been described with respect to a number of embodiments and examples, those skilled in the art, having benefit of this disclosure, will appreciate that other embodiments can be devised which do not depart from the scope of the invention as disclosed herein.

## Claims

1. An acid cure coating composition, comprising an alkyd resin, an amino resin, and an acetoacetyl-functional silicon-based resin,
wherein upon curing, the amino resin itself releases at least 0.8 wt% of formaldehyde, based on the weight of the amino resin;
weight ratio of the alkyd resin and the amino resin is in a range of from 70:30 to 45:55, preferably from 65:35 to 50:50.

2. The acid cure coating composition according to claim 1, wherein the amino resin is the product of reacting aldehydes with amino compound(s) selected from the group of melamine, urea, benzoguanamine, acetoguanamine and any combination thereof.

3. The acid cure coating composition according to claim 1, wherein the amino resin is butylated amino resin, isobutylated amino resin, methylated amino resin or any combination thereof, and preferably the amino resin has a hydroxyl value of from 50 to 250 mg KOH/g.

4. The acid cure coating composition according to claim 1, wherein acid cure coating composition further comprises a acidic cure catalyst selected from the group consisting of paratoluene sulfonic acid, benzene sulfonic acid, methane sulfonic acid, dinonylnaphthalene sulfonic acid, dinonylnaphthalene disulfonic acid, dodecylbenzene sulfonic acid, oxalic acid, maleic acid, phthalic acid, acrylic acid, ethyl phosphate, phosphoric acid, dimethyl acid pyrophosphate and any combination thereof.

5. The acid cure coating composition according to any one of claims 1 to 4, wherein the acetoacetyl functional silicon-based resin is presence in an amount of from 0.1 to 25 wt%, preferably from 0.7 to 15 wt%, relative to the total weight of the acid cure coating composition.

6. The acid cure coating composition according to any one of claims 1 to 4, wherein the acetoacetyl functional silicon-based resin comprises acetoacetyl functional groups in an amount of at least 25 wt%, relative to the total weight of the acetoacetyl functional silicon-based resin.

7. The acid cure coating composition according to any one of claims 1 to 4, wherein the acetoacetyl functional silicon-based resin has a number average molecular weight of from 700 g/mol to 20,000 g/mol.

8. The acid cure coating composition according to any one of claims 1 to 4, wherein the acetoacetyl functional silicon-based resin comprises at least 3.5 wt% of silicon atom, relative to the total weight of the acetoacetyl functional silicon-based resin.

9. The acid cure coating composition according to any one of claims 1 to 4, wherein the coating obtained from the acid cure coating composition releases less than 8 µg/inch² formaldehyde when tested with a thickness of 100 µm at 25 °C and 50% humidity.

10. The acid cure coating composition according to any one of claims 1 to 4, wherein the coating obtained from the acid cure coating composition has a pencil hardness of at least HB.

11. A process for the preparation of the acid cure coating composition according to any one of claims 1 to 10, comprising the step of
mixing an acetoacetyl functional silicon-based resin with an alkyd resin and an amino resin,
wherein upon curing, the amino resin itself releases at least 0.8 wt% of formaldehyde, based on the weight of the amino resin;
weight ratio of the alkyd resin and the amino resin is in a range of from 70:30 to 45:55.

12. The process according to claim 11, wherein the acetoacetyl functional silicon-based resin is in an amount of from 0.1 to 25 wt%, relative to the total weight of the acetoacetyl functional silicon-based resin, the alkyd resin and the amino resin.

13. A coated article comprising a substrate having thereon a coating formed from the acid cure coating composition according to any one of claims 1-10.

14. The coating article according to claim 13, wherein the substrate is selected from the group consisting of wood, paper, textile, leather, nonwoven, plastics surfaces, glass, ceramic, mineral building materials, metals and coated metals.

15. The coating article according to claim 13 or 14, wherein the coating releases less than 8 µg/inch² formaldehyde in dried film when tested with a thickness of 100 µm at 25 °C and 50% humidity.
